# EUROPÄISCHE PATENTSCHRIFT

(11) **EP 3 742 588 B1**
(45) Veröffentlichungstag und Bekanntmachung des Hinweises auf die Patenterteilung: **06.03.2024**
(21) Anmeldenummer: 20175695.4
(22) Anmeldetag: 20.05.2020
(51) Int. Cl.: H02K 7/08, H02K 15/16

(54) **ELEKTROMOTOR UND HASPEL**
ELECTRIC MOTOR AND REEL
MOTEUR ÉLECTRIQUE ET TREUIL

(30) Priorität: 23.05.2019 LU 101231
(43) Veröffentlichungstag der Anmeldung: 25.11.2020
(73) Patentinhaber: Oswald Elektromotoren Gmbh, 63897 Miltenberg (DE)
(72) Erfinder: Oswald, Johannes, 63897 Miltenberg (DE); Walter, Michael, 63897 Miltenberg (DE)
(74) Vertreter: Habermann Intellectual Property Partnerschaft von Patentanwälten mbB

(56) Entgegenhaltungen:
- WO-A1-95/20260
- US-A1- 2004 027 016
- US-A1- 2014 197 705
- US-B2- 7 064 464

## Beschreibung

Die Erfindung betrifft einen Elektromotor mit einem Stator, einem Rotor und einem Motorgehäuse mit einer ersten Stirnfläche und einer von der ersten Stirnfläche beabstandeten und parallel zu der ersten Stirnfläche ausgerichteten zweiten Stirnfläche, wobei zwischen den Stirnflächen der Rotor und der Stator angeordnet sind, wobei der Rotor innerhalb des Stators drehbar angeordnet und mittels eines Abtriebslagers und zumindest eines Stützlagers drehbar an dem Motorgehäuse gelagert ist, wobei das Abtriebslager als Wälzlager ausgebildet ist, wobei der Stator innerhalb des Motorgehäuses angeordnet und drehfest an dem Motorgehäuse festgelegt ist und wobei das Abtriebslager im Bereich der ersten Stirnfläche und das Stützlager im Bereich der zweiten Stirnfläche innerhalb des Motorgehäuses angeordnet ist

In modernen industriellen Prozessen wird ein hoher Anteil der eingesetzten Maschinen durch Elektromotoren angetrieben. Dabei ist es üblich, dass die Elektromotoren und die Arbeitsmaschinen weitestgehend unabhängig voneinander entwickelt, konstruiert und hergestellt werden. Üblicherweise wird zwischen diesen beiden Systemkomponenten lediglich eine Schnittstelle in Form einer Kraftübertragung, beispielsweise einem Flansch, einer Welle und/ oder einem Getriebe definiert, durch die ausschließlich eine Antriebskraft übertragen wird.

Im Bereich der elektromotorisch betriebenen Haspeln ist es üblich, dass eine Haspeltrommel von einem handelsüblichen und lediglich nach seinen Leistungsdaten an die Haspeltrommel angepassten Elektromotor angetrieben wird. Haspeltrommeln weisen einen hohlzylindrisch ausgebildeten Innenraum auf, um den die Haspeltrommel im Betrieb rotiert. Bei den aus dem Stand der Technik bekannten elektromotorisch angetriebenen Haspeln befindet sich der Elektromotor vollständig außerhalb des Innenraums. Hierdurch wird Bauraum verschwendet.

Bei den aus dem Stand der Technik bekannten Elektromotoren werden Lagerelemente zur Lagerung des Rotors von einander gegenüberliegenden Seiten des Motorgehäuses her in das Motorgehäuse eingebaut. Hierbei ist insbesondere nachteilig, dass das Motorgehäuse sowohl für die Montage, als auch für die Demontage des Rotors von beiden Seiten her zugänglich sein muss. Bei den bekannten Elektromotoren ist deshalb für Wartungs- und Instandsetzungsarbeiten häufig eine komplette Demontage des Elektromotors oder gar der gesamten durch den Elektromotor angetriebenen Anlage erforderlich.

In den Druckschriften US 2014/197705 A1 und US 7 064 464 B2 werden jeweils Elektromotoren mit besonderen Haltemechanismen für den Stator beschrieben. Aus der Druckschrift US 2004/027016 A1 ist ein Elektromotor bekannt, wobei der Durchmesser des Rotors des Elektromotors kleiner ist als ein Innendurchmesser des Lagers des Rotors.

Als Aufgabe der vorliegenden Erfindung wird es angesehen, einen Elektromotor zur Verfügung zu stellen, dessen Montage vereinfacht und dessen Wartungsfreundlichkeit erhöht ist.

Diese Aufgabe wird erfindungsgemäß dadurch gelöst, dass ein minimaler Abtriebslagerinnendurchmesser größer ist, als ein maximaler Rotordurchmesser des Rotors und ein maximaler Stützlageraußendurchmesser, wobei der Rotor mit an dem Rotor festgelegten Stützlager durch das Abtriebslager und den Stator hindurchführbar ist und wobei eine Montage des Rotors mit dem daran festgelegten Stützlager von einer Abtriebsseite des Elektromotors her ermöglicht ist. Es ist auch möglich und vorgesehen, dass der Elektromotor Führungselemente aufweisen kann, mittels derer eine Verlagerung des Rotors quer zu einer Einführrichtung verhindert ist. Die Führungselemente können beispielsweise Führungsschienen, Führungsstangen, Führungsdorne oder Ähnliches sein.

Eine vorteilhafte Umsetzung des Erfindungsgedankens sieht vor, dass der Abtriebslagerinnendurchmesser größer als 90 mm, bevorzugt größer als 100 mm und besonders bevorzugt größer als 110 mm ist. Insbesondere bei großen Elektromotoren mit Rotordurchmessern von über 75 mm ist die erfindungsgemäße Ausgestaltung vorteilhaft, da Montage und Wartung von Elektromotoren im Allgemeinen aufwändiger werden, je größer ein Elektromotor ist.

Eine vorteilhafte Ausgestaltung der Erfindung sieht vor, dass das Abtriebslager und/ oder das Stützlager als Wälzlager ausgebildet sind. Die Wälzlager können beispielsweise Kugellager, Tonnenlager oder Ähnliches sein.

Bei einer vorteilhaften Ausgestaltung des erfindungsgemäßen Elektromotors ist vorgesehen, dass der Elektromotor zwischen der ersten Stirnfläche und dem Abtriebslager ein Dichtelement aufweist, dass zwischen einer Innenfläche des Motorgehäuses und einer Außenfläche des Rotors angeordnet ist und das sich entlang einer Umfangsrichtung des Motorgehäuses erstreckt, wobei durch das Dichtelement ein durch das Motorgehäuse definierter Elektromotorinnenraum gegenüber einem den Elektromotor umgebenden Umgebungsvolumen abgedichtet ist. Eine Abdichtung des Elektromotorinnenraums gegenüber dem Umgebungsvolumen ist von besonderer Bedeutung, wenn der Elektromotor in stark kontaminierten Umgebungen eingesetzt wird, wobei kontaminiert meint, dass das Umgebungsvolumen insbesondere auch Staub, Aerosole, Gase oder Ähnliches aufweist.

Eine vorteilhafte Umsetzung des Erfindungsgedankens sieht vor, dass das Dichtelement eine Labyrinthdichtung ist. Labyrinthdichtungen sind besonders geeignet um Luftspalten zwischen Bauteilen abzudichten, wenn eines der Bauteile rotiert. Die Dichtwirkung beruht dabei vorrangig darauf, dass innerhalb der Dichtung starke Turbulenzen ausgebildet werden, die ein Durchströmen der Dichtung verhindern.

Eine vorteilhafte Ausgestaltung der Erfindung sieht vor, dass das Motorgehäuse einen Lagerabschnitt aufweist, der sich von der ersten Stirnfläche in Richtung der zweiten Stirnfläche erstreckt, wobei ein Gehäusedurchmesser des Motorgehäuses im Bereich des Lagerabschnitts kleiner ist, als ein Ausnehmungsdurchmesser einer Lagerausnehmung der Haspeltrommel und der Lagerabschnitt des Motorgehäuses in die Lagerausnehmung der Haspeltrommel einführbar ist, wobei der Abtriebsabschnitt des Rotors und der Antriebsabschnitt der Haspeltrommel derart aneinander angepasst sind, dass bei in die Lagerausnehmung eingeführtem Lagerabschnitt der Abtriebsabschnitt und der Antriebsabschnitt mechanisch miteinander in Wirkverbindung bringbar sind, sodass die Haspeltrommel durch den Elektromotor in eine Rotationsbewegung um den Lagerabschnitt herum bringbar ist. Es ist erfindungsgemäß vorgesehen, dass durch die Haspeltrommel und den Elektromotor eine elektromotorisch antreibbare Haspel bildbar ist. Durch die erfindungsgemäße Ausgestaltung des Elektromotors ist die Ausgestaltung von elektromotorisch antreibbaren Haspeln ermöglicht, die gegenüber den aus dem Stand der Technik bekannten Haspeln einen deutlich reduzierten Platzbedarf aufweisen.

Eine vorteilhafte Umsetzung des Erfindungsgedankens sieht vor, dass in dem Lagerabschnitt Lagerelemente angeordnet sind, wobei die Lagerelemente in dem Lagerabschnitt an einer Gehäuseoberfläche des Motorgehäuses anliegen, wobei die Lagerelemente mit einer Trommelinnenfläche der Lagerausnehmung der Haspeltrommel in Anlage bringbar sind, sodass die Haspeltrommel mittels der Lagerelemente in dem Lagerabschnitt an dem Motorgehäuse lagerbar ist. Durch eine derartige Ausgestaltung des erfindungsgemäßen Elektromotors sind einer Drehbewegung der Haspeltrommel entgegengerichtete Widerstände, insbesondere Reibungswiderstände, reduziert.

Bei einer besonders vorteilhaften Ausführungsform des erfindungsgemäßen Elektromotors ist vorgesehen, dass der Elektromotor zumindest zwei voneinander beabstandete Lagerelemente aufweist, die mit in axialer Richtung voneinander beabstandeten Abschnitten der Trommelinnenfläche in Anlage bringbar sind. Hierdurch wird eine stabile Lagerung der Haspeltrommel ermöglicht, durch die ein Rundlauf der Haspeltrommel verbessert ist. Darüber hinaus ist es erfindungsgemäße auch vorgesehen, dass der Elektromotor eine Vielzahl von Lagerelementen aufweisen kann. Durch die Verwendung mehrerer Lagerelemente kann der Elektromotor beispielsweise an erhöhte Belastungen, beispielsweise durch eine besonders schwere Haspeltrommel angepasst werden.

Eine vorteilhafte Ausgestaltung der Erfindung sieht vor, dass zumindest eines der Lagerelemente als ein Wälzlager ausgebildet ist. Wälzlager sind in einer Vielzahl unterschiedlicher Ausführungen bekannt, die unterschiedlichsten Belastungen angepasst sein können. Es ist vorgesehen, dass bei einer besonders vorteilhaften Umsetzung des Erfindungsgedankens die als Wälzlager ausgebildeten Lagerelemente des Elektromotors insbesondere an hohe dynamische Belastungen angepasst sind.

Bei einer vorteilhaften Ausgestaltung des erfindungsgemäßen Elektromotors ist vorgesehen, dass zumindest eines der Lagerelemente als ein Gleitlager ausgebildet ist. Gleitlager sind in einer Vielzahl unterschiedlicher Ausführungen bekannt, die unterschiedlichsten Belastungen angepasst sein können. Es ist vorgesehen, dass bei einer besonders vorteilhaften Umsetzung des Erfindungsgedankens die als Gleitlager ausgebildeten Lagerelemente des Elektromotors insbesondere an hohe dynamische Belastungen angepasst sind.

Eine vorteilhafte Umsetzung des Erfindungsgedankens sieht vor, dass der Abtriebsabschnitt des Rotors zumindest abschnittsweise derart an den Antriebsabschnitt der Haspeltrommel angepasst ist, dass der Abtriebsabschnitt mittels zumindest eines Festlegemittels an dem Antriebsabschnitt festlegbar ist. Es ist erfindungsgemäß vorgesehen, dass das Festlegemittel beispielsweise eine Schraube, ein Bolzen, eine Nut-Feder-Verbindung oder Ähnliches umfassen kann. Durch das Festlegemittel ist die Belastbarkeit einer Verbindung zwischen dem Elektromotor und der Haspeltrommel erhöht, sodass ein höheres Drehmoment übertragbar ist.

Eine vorteilhafte Ausgestaltung der Erfindung sieht vor, dass der Abtriebsabschnitt des Rotors zumindest abschnittsweise derart an den Antriebsabschnitt der Haspeltrommel angepasst ist, dass zwischen dem Abtriebsabschnitt und dem Antriebsabschnitt eine formschlüssige Verbindung herstellbar ist. Es ist erfindungsgemäß vorgesehen, dass der Antriebsabschnitt und der Abtriebsabschnitt jeweils aneinander angepasste und ineinandergreifende Profile aufweisen können, mittels derer die formschlüssige Verbindung herstellbar ist.

Bei einer vorteilhaften Ausgestaltung des erfindungsgemäßen Elektromotors ist vorgesehen, dass der Rotor des Elektromotors ein Größenverhältnis zwischen einer Rotorlänge und einem Rotordurchmesser von zumindest 1,5:1, bevorzugt von zumindest 2:1 und besonders bevorzugt von zumindest 3:1 aufweist. Anders als die aus dem Stand der Technik bekannten Elektromotoren, weist der erfindungsgemäße Elektromotor eine verhältnismäßig große Ausdehnung in axialer Richtung auf. Hierdurch ist es ermöglicht, dass der Elektromotor mit einer Haspeltrommel verwendet werden kann, deren Abmessungen einer üblichen Haspeltrommel entsprechen. Übliche Haspeltrommel im Sinne des Erfindungsgedankens meint eine Haspeltrommel, wie sie bei den aus dem Stand der Technik bekannten Haspeln verwendet wird.

Eine vorteilhafte Umsetzung des Erfindungsgedankens sieht vor, dass der Elektromotor eine Gesamtmasse von zumindest 75kg, bevorzugt von zumindest 90kg und besonders bevorzugt von zumindest 115kg aufweist, wobei der Elektromotor als ein wassergekühlter Elektromotor ausgestaltet ist. Es ist erfindungsgemäß vorgesehen, dass der Elektromotor zur Verwendung im Rahmen industrieller Prozesse dimensioniert und ausgelegt ist.

Die Erfindung betrifft auch eine Haspel aus einer Haspeltrommel und einem zuvor beschriebenen Elektromotor, wobei der Antriebsabschnitt der Haspeltrommel an dem Abtriebsabschnitt des Rotors des Elektromotors festgelegt ist, wobei der Lagerabschnitt des Motorgehäuses in die Lagerausnehmung der Haspeltrommel eingeführt, der Lagerabschnitt abschnittsweise von der Haspeltrommel umgriffen ist und die Haspeltrommel um den Lagerabschnitt herum rotierbar ist. Eine derartig ausgestaltete erfindungsgemäße Haspel ist insbesondere zur Verwendung in einer Diamantdrahtsäge geeignet.

Weitere vorteilhafte Ausgestaltungen des Elektromotors werden anhand von in den Zeichnungen dargestellten Ausführungsbeispielen erläutert. Es zeigen:
Figur 1 eine schematisch dargestellte Schnittansicht einer Ausführungsform des Elektromotors und
Figur 2 eine schematisch dargestellte Schnittansicht einer Ausführungsform der Haspel.

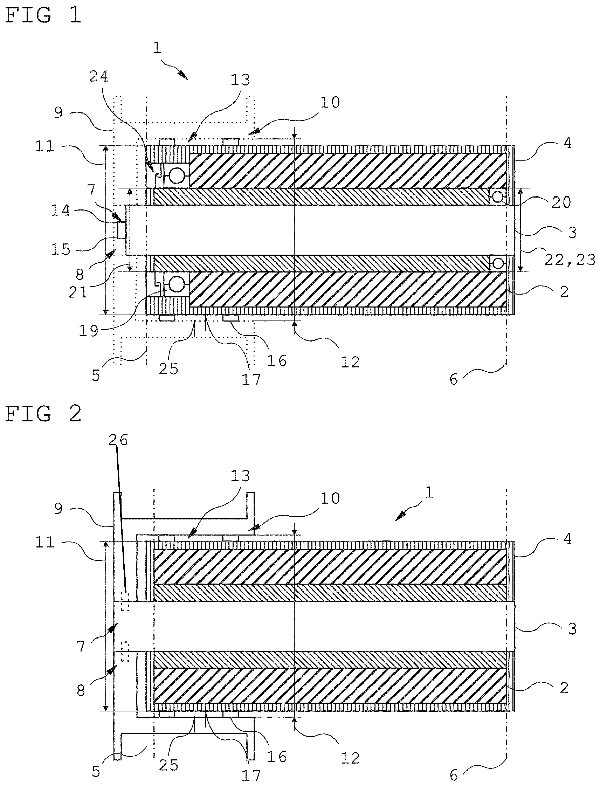

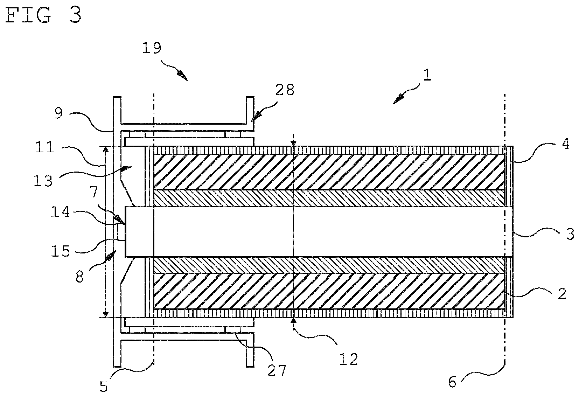

In Figur 1 ist eine schematisch dargestellte Schnittansicht einer Ausführungsform eines erfindungsgemäßen Elektromotors 1 gezeigt. Der Elektromotor 1 weist einen Stator 2, einen Rotor 3 und ein Motorgehäuse 4 mit einer ersten Stirnfläche 5 und einer von der ersten Stirnfläche 5 beabstandeten und parallel zu der ersten Stirnfläche 5 ausgerichteten zweiten Stirnfläche 6 auf. Zwischen den Stirnflächen 5,6 des Motorgehäuses 4 sind der Rotor 3 und der Stator 2 angeordnet. Der Rotor 3 ist innerhalb des Stators 2 drehbar angeordnet sowie drehbar an dem Motorgehäuse 4 gelagert. Der Stator 2 ist innerhalb des Motorgehäuses 4 angeordnet und drehfest an dem Motorgehäuse 4 festgelegt. Der Rotor 3 weist im Bereich der ersten Stirnfläche 5 einen Abtriebsabschnitt 7 aufweist an dem ein Antriebsabschnitt 8 einer Haspeltrommel 9 drehfest festlegbar ist.

Das Motorgehäuse 4 weist einen Lagerabschnitt 10 auf, der sich von der ersten Stirnfläche 5 in Richtung der zweiten Stirnfläche 6 erstreckt. Ein Gehäusedurchmesser 11 des Motorgehäuses 4 im Bereich des Lagerabschnitts 10 ist kleiner, als ein Ausnehmungsdurchmesser 12 einer Lagerausnehmung 13 der Haspeltrommel 9. Der Lagerabschnitt 10 des Motorgehäuses 4 ist in die Lagerausnehmung 13 der Haspeltrommel 9 einführbar. Der Abtriebsabschnitt 7 des Rotors 3 ist an den Antriebsabschnitt 8 der Haspeltrommel 9 angepasst, sodass der Abtriebsabschnitt 7 und der Antriebsabschnitt 8 mechanisch miteinander in Wirkverbindung bringbar sind. Bei dem dargestellten Elektromotor 1 ist die Wirkverbindung zwischen dem Abtriebsabschnitt 7 und dem Antriebsabschnitt 8 mittels einer formschlüssigen Verbindung herstellbar. Der Rotor 3 weist dazu in seinem Abtriebsabschnitt 7 einen sich von der ersten und zweiten Stirnfläche 5,6 weg erstreckenden Steg 14 auf, der in eine in dem Antriebsabschnitt 8 der Haspeltrommel 9 angeordnete und an den Steg 14 angepasste Nut 15 einführbar ist. Die Haspeltrommel 9 ist durch den Elektromotor 1 in eine Rotationsbewegung um den Lagerabschnitt 10 herum bringbar.

In dem Lagerabschnitt 10 des dargestellten Elektromotors 1 sind zwei schematisch dargestellte Lagerelemente 16 angeordnet. Die Lagerelemente 16 liegen in dem Lagerabschnitt 10 an einer Gehäuseoberfläche 17 des Motorgehäuses 4 an und erstrecken sich vollständig entlang einer Umfangsrichtung des Motorgehäuses 4. Die Lagerelemente 16 sind mit einer Trommelinnenfläche 18 der Lagerausnehmung 13 der Haspeltrommel 9 in Anlage bringbar. Die Haspeltrommel 9 ist mittels der Lagerelemente 16 in dem Lagerabschnitt 10 an dem Motorgehäuse 4 lagerbar. Die Lagerelemente 16 des dargestellten Elektromotors 1 sind als Gleitlager ausgebildet.

Der Rotor 3 der dargestellten Ausführungsform eines erfindungsgemäßen Elektromotors 1 ist mittels eines Abtriebslagers 19 und eines Stützlagers 20 drehbar an dem Motorgehäuse 4 gelagert. Das Abtriebslager 19 ist im Bereich der ersten Stirnfläche 5 und das Stützlager 20 im Bereich der zweiten Stirnfläche 6 innerhalb des Motorgehäuses 4 angeordnet. Dabei ist ein minimaler Abtriebslagerinnendurchmesser 21 größer, als ein maximaler Rotordurchmesser 22 des Rotors 3 und ein maximaler Stützlageraußendurchmesser 23. Der Rotor 3 ist mit dem an dem Rotor 3 festgelegten Stützlager 20 durch das Abtriebslager 19 und den Stator 2 hindurchführbar.

Der dargestellte Elektromotor 1 weist zwischen der ersten Stirnfläche 5 und dem Abtriebslager 19 ein Dichtelement 24 auf, das zwischen einer Innenfläche (nicht bezeichnet) des Motorgehäuses 4 und einer Außenfläche (nicht bezeichnet) des Rotors 3 angeordnet ist.

In Figur 2 ist eine schematisch dargestellte Schnittansicht einer Haspel 25 gezeigt. Die Haspel 25 weist eine Haspeltrommel 9 und einen Elektromotor 1 auf. Der Antriebsabschnitt 8 der Haspeltrommel 9 ist an dem Abtriebsabschnitt 7 des Rotors 3 des Elektromotors 1 mittels mehrerer Festlegemittel 26 festgelegt. Der Lagerabschnitt 10 des Motorgehäuses 4 ist in die Lagerausnehmung 13 der Haspeltrommel 9 eingeführt und der Lagerabschnitt 10 ist von der Haspeltrommel 9 umgriffen. Die Haspeltrommel 9 ist um den Lagerabschnitt 10 herum rotierbar. Die schematisch dargestellten Lagerelemente 16 sind als Wälzlager ausgebildet.

Mittels der in den Figuren 1 und 2 dargestellten Haspeltrommeln 9 ist ein nicht dargestelltes draht-, seil,- und/ oder fadenförmiges Material sowohl auf, als auch abspulbar.

### BEZUGSZEIGHENLISTE

- 1.: Elektromotor
- 2.: Stator
- 3.: Rotor
- 4.: Motorgehäuse
- 5.: erste Stirnfläche
- 6.: zweite Stirnfläche
- 7.: Abtriebsabschnitt
- 8.: Antriebsabschnitt
- 9.: Haspeltrommel
- 10.: Lagerabschnitt
- 11.: Gehäusedurchmesser
- 12.: Ausnehmungsdurchmesser
- 13.: Lagerausnehmung
- 14.: Steg
- 15.: Nut
- 16.: Lagerelement
- 17.: Gehäuseoberfläche
- 18.: Trommelinnenfläche
- 19.: Abtriebslager
- 20.: Stützlager
- 21.: Abtriebslagerinnendurchmesser
- 22.: Rotordurchmesser
- 23.: Stützlageraußendurchmesser
- 24.: Dichtelement
- 25.: Haspel
- 26.: Festlegemittel

## Patentansprüche

1. Elektromotor (1) mit einem Stator (2), einem Rotor (3) und einem Motorgehäuse (4) mit einer ersten Stirnfläche (5) und einer von der ersten Stirnfläche (5) beabstandeten und parallel zu der ersten Stirnfläche (5) ausgerichteten zweiten Stirnfläche (6), wobei zwischen den Stirnflächen (5,6) der Rotor (3) und der Stator (2) angeordnet sind, wobei der Rotor (3) innerhalb des Stators (2) drehbar angeordnet und mittels eines Abtriebslagers (19) und zumindest eines Stützlagers (20) drehbar an dem Motorgehäuse (4) gelagert ist, wobei das Abtriebslager (19) als Wälzlager ausgebildet ist, wobei der Stator (2) innerhalb des Motorgehäuses (4) angeordnet und drehfest an dem Motorgehäuse (4) festgelegt ist und wobei das Abtriebslager (19) im Bereich der ersten Stirnfläche (5) und das Stützlager (20) im Bereich der zweiten Stirnfläche (6) innerhalb des Motorgehäuses (4) angeordnet ist, **dadurch gekennzeichnet, dass** ein minimaler Abtriebslagerinnendurchmesser (21) größer ist, als ein maximaler Rotordurchmesser (22) des Rotors (3) und ein maximaler Stützlageraußendurchmesser (23), wobei der Rotor (3) mit an dem Rotor (3) festgelegtem Stützlager (20) durch das Abtriebslager (19) und den Stator hindurchführbar ist und wobei eine Montage des Rotors (3) mit dem daran festgelegten Stützlager (20) von einer Abtriebsseite des Elektromotors (1) her ermöglicht ist.

2. Elektromotor (1) nach Anspruch 1, **dadurch gekennzeichnet, dass** der Abtriebslagerinnendurchmesser (21) größer als 90 mm, bevorzugt größer als 100 mm und besonders bevorzugt größer als 110 mm ist.

3. Elektromotor (1) nach einem der Ansprüche 1 oder 2, **dadurch gekennzeichnet, dass** das Stützlager (20) als Wälzlager ausgebildet ist.

4. Elektromotor (1) nach einem der Ansprüche 1 bis 3, **dadurch gekennzeichnet, dass** der Elektromotor (1) zwischen der ersten Stirnfläche (5) und dem Abtriebslager (19) ein Dichtelement (24) aufweist, dass zwischen einer Innenfläche des Motorgehäuses (4) und einer Außenfläche des Rotors (3) angeordnet ist und das sich entlang einer Umfangsrichtung des Motorgehäuses (4) erstreckt, wobei durch das Dichtelement (24) ein durch das Motorgehäuse (4) definierter Elektromotorinnenraum gegenüber einem den Elektromotor (1) umgebenden Umgebungsvolumen abgedichtet ist.

5. Elektromotor (1) nach Anspruch 4, **dadurch gekennzeichnet, dass** das Dichtelement (24) eine Labyrinthdichtung ist.

6. Elektromotor nach einem der Ansprüche 1 bis 4, **dadurch gekennzeichnet, dass** der Rotor (3) im Bereich der ersten Stirnfläche (5) einen Abtriebsabschnitt (7) aufweist an dem ein Antriebsabschnitt (8) einer Haspeltrommel (9) drehfest festlegbar ist, wobei das Motorgehäuse (4) einen Lagerabschnitt (10) aufweist, der sich von der ersten Stirnfläche (5) in Richtung der zweiten Stirnfläche (6) erstreckt, wobei ein Gehäusedurchmesser (11) des Motorgehäuses (4) im Bereich des Lagerabschnitts (10) kleiner ist, als ein Ausnehmungsdurchmesser (12) einer Lagerausnehmung (13) der Haspeltrommel (9) und der Lagerabschnitt (10) des Motorgehäuses (4) in die Lagerausnehmung (13) der Haspeltrommel (9) einführbar ist, wobei der Abtriebsabschnitt (7) des Rotors (3) und der Antriebsabschnitt (8) der Haspeltrommel (9) derart aneinander angepasst sind, dass bei in die Lagerausnehmung (13) eingeführtem Lagerabschnitt (10) der Abtriebsabschnitt (7) und der Antriebsabschnitt (8) mechanisch miteinander in Wirkverbindung bringbar sind, sodass die Haspeltrommel (9) durch den Elektromotor (1) in eine Rotationsbewegung um den Lagerabschnitt (10) herum bringbar ist.

7. Elektromotor (1) gemäß Anspruch 6, **dadurch gekennzeichnet, dass** das in dem Lagerabschnitt (10) Lagerelemente (16) angeordnet sind, wobei die Lagerelemente (16) in dem Lagerabschnitt (10) an einer Gehäuseoberfläche (17) des Motorgehäuses (4) anliegen, wobei die Lagerelemente (16) mit einer Trommelinnenfläche der Lagerausnehmung (13) der Haspeltrommel (9) in Anlage bringbar sind, sodass die Haspeltrommel (9) mittels der Lagerelemente (16) in dem Lagerabschnitt (10) an dem Motorgehäuse (4) lagerbar ist.

8. Elektromotor (1) gemäß Anspruch 7, **dadurch gekennzeichnet, dass** zumindest eines der Lagerelemente (16) als ein Wälzlager ausgebildet ist.

9. Elektromotor (1) gemäß einem der Ansprüche 7 oder 8, **dadurch gekennzeichnet, dass** zumindest eines der Lagerelemente (16) als ein Gleitlager ausgebildet ist.

10. Elektromotor (1) gemäß einem der Ansprüche 6 bis 9, **dadurch gekennzeichnet, dass** der Abtriebsabschnitt (7) des Rotors (3) zumindest abschnittsweise derart an den Antriebsabschnitt (8) der Haspeltrommel (9) angepasst ist, dass der Abtriebsabschnitt (7) mittels zumindest eines Festlegemittels (26) an dem Antriebsabschnitt (8) festlegbar ist.

11. Elektromotor (1) gemäß einem der Ansprüche 6 bis 10, **dadurch gekennzeichnet, dass** der Abtriebsabschnitt (7) des Rotors (3) zumindest abschnittsweise derart an den Antriebsabschnitt (8) der Haspeltrommel (9) angepasst ist, dass zwischen dem Abtriebsabschnitt (7) und dem Antriebsabschnitt (8) eine formschlüssige Verbindung herstellbar ist.

12. Elektromotor (1) gemäß einem der Ansprüche 6 bis 11, **dadurch gekennzeichnet, dass** der Rotor (3) des Elektromotors (1) ein Größenverhältnis zwischen einer Rotorlänge und dem Rotordurchmesser (22) von zumindest 1,5:1, bevorzugt von zumindest 2:1 und besonders bevorzugt von zumindest 3:1 aufweist.

13. Elektromotor (1) gemäß einem der Ansprüche 6 bis 12, **dadurch gekennzeichnet, dass** der Elektromotor (1) eine Gesamtmasse von zumindest 75kg, bevorzugt von zumindest 90kg und besonders bevorzugt von zumindest 115kg aufweist, wobei der Elektromotor (1) als ein wassergekühlter Elektromotor (1) ausgestaltet ist.

14. Haspel (25) aus einer Haspeltrommel (9) und einem Elektromotor (1) nach einem der Ansprüche 6 bis 13, wobei der Antriebsabschnitt (8) der Haspeltrommel (9) an dem Abtriebsabschnitt (7) des Rotors (3) des Elektromotors (1) festgelegt ist, wobei der Lagerabschnitt (10) des Motorgehäuses (4) in die Lagerausnehmung (13) der Haspeltrommel (9) eingeführt, der Lagerabschnitt (10) abschnittsweise von der Haspeltrommel (9) umgriffen ist und die Haspeltrommel (9) um den Lagerabschnitt (10) herum rotierbar ist.

## Claims

1. Electric motor (1) with a stator (2), a rotor (3) and a motor housing (4), with a first end face (5) and a second end face (6), which is spaced from the first end face (5) and oriented parallel to the first end face (5), wherein the rotor (3) and the stator (2) are arranged between the end faces (5,6), wherein the rotor (3) is arranged rotatably within the stator (2) and is supported rotatably on the motor housing (4) by means of an output bearing (19) and at least one support bearing (20), wherein the output bearing (19) is configured as a rolling bearing, wherein the stator (2) is arranged within the motor housing (4) and fixed on the motor housing (4) in a torque-proof manner and wherein the output bearing (19) is arranged in the region of the first end face (5) and the support bearing (20) in the region of the second end face (6) within the motor housing (4), **characterised in that** a minimal output bearing inner diameter (21) is larger than a maximal rotor diameter (22) of the rotor (3) and a maximal support bearing outer diameter (23), wherein the rotor (3) with support bearing (20) fixed to the rotor (3) can be passed through the output bearing (19) and the stator and wherein mounting of the rotor (3) with the support bearing (20) fixed to it is facilitated from an output side of the electric motor (1) .

2. Electric motor (1) according to claim 1, **characterised in that** the output bearing inner diameter (21) is greater than 90 mm, preferably greater than 100 mm and particularly preferably greater than 110 mm.

3. Electric motor (1) according to one of claims 1 or 2, **characterised in that** the support bearing (20) is configured as a rolling bearing.

4. Electric motor (1) according to one of claims 1 to 3, **characterised in that** the electric motor (1) comprises a sealing element (24) between the first end face (5) and the output bearing (19), which element is arranged between an inner surface of the motor housing (4) and an outer surface of the rotor (3) and which extends along a circumferential direction of the motor housing (4), wherein an electric motor interior space defined by the motor housing (4) is sealed by the sealing element (24) with respect to an ambient volume surrounding the electric motor (1).

5. Electric motor (1) according to claim 4, **characterised in that** the sealing element (24) is a labyrinth seal.

6. Electric motor according to any one of claims 1 to 4, **characterised in that** the rotor (3) comprises in the region of the first end face (5) an output section (7) on which a drive section (8) of a reel drum (9) can be fixed in a torque-proof manner, wherein the motor housing (4) comprises a bearing section (10), which extends from the first end face (5) in the direction of the second end face (6), wherein a housing diameter (11) of the motor housing (4) is smaller in the region of the bearing section (10) than a recess diameter (12) of a bearing recess (13) of the reel drum (9) and the bearing section (10) of the motor housing (4) can be introduced into the bearing recess (13) of the reel drum (9), wherein the output section (7) of the rotor (3) and the drive section (8) of the reel drum (9) are adapted to one another in such a way that when the bearing section (10) is introduced into the bearing recess (13), the output section (7) and the drive section (8) can be brought mechanically into operative connection with one another so that the reel drum (9) can be brought by the electric motor (1) into a rotatory movement about the bearing section (10).

7. Electric motor (1) according to claim 6, **characterised in that** arranged in the bearing section (10) are bearing elements (16), wherein the bearing elements (16) rest in the bearing section (10) on a housing surface (17) of the motor housing (4), wherein the bearing elements (16) can be brought into contact with a drum inner surface of the bearing recess (13) of the reel drum (9) so that the reel drum (9) can be supported by means of the bearing elements (16) in the bearing section (10) on the motor housing (4).

8. Electric motor (1) according to claim 7, **characterised in that** at least one of the bearing elements (16) is configured as a rolling bearing.

9. Electric motor (1) according to one of claims 7 or 8, **characterised in that** at least one of the bearing elements (16) is configured as a plain bearing.

10. Electric motor (1) according to any one of claims 6 to 9, **characterised in that** the output section (7) of the rotor (3) is adapted, at least in sections, to the drive section (8) of the reel drum (9) in such a way that the output section (7) can be fixed by means of at least one fixing means (26) on the drive section (8).

11. Electric motor (1) according to any one of claims 6 to 10, **characterised in that** the output section (7) of the rotor (3) is adapted, at least in sections, to the drive section (8) of the reel drum (9) in such a way that a positive-locking connection can be created between the output section (7) and the drive section (8).

12. Electric motor (1) according to any one of claims 6 to 11, **characterised in that** the rotor (3) of the electric motor (1) has a size ratio between a rotor length and the rotor diameter (22) of at least 1.5:1, preferably of at least 2:1 and particularly preferably of at least 3:1.

13. Electric motor (1) according to any one of claims 6 to 12, **characterised in that** the electric motor (1) has a total mass of at least 75 kg, preferably of at least 90 kg and particularly preferably of at least 115 kg, wherein the electric motor (1) is configured as a water-cooled electric motor (1).

14. Reel (25) composed of a reel drum (9) and an electric motor (1) according to any one of claims 6 to 13, wherein the drive section (8) of the reel drum (9) is fixed on the output section (7) of the rotor (3) of the electric motor (1), wherein the bearing section (10) of the motor housing (4) is introduced into the bearing recess (13) of the reel drum (9), the bearing section (10) is encompassed in sections by the reel drum (9) and the reel drum (9) is rotatable about the bearing section (10).

## Revendications

1. Moteur électrique (1) comportant un stator (2), un rotor (3) et un carter de moteur (4) doté d'une première face frontale (5) et d'une seconde face frontale (6) espacée de la première face frontale (5) et orientée parallèlement à la première face frontale (5), le rotor (3) et le stator (2) étant disposés entre les faces frontales (5, 6), le rotor (3) étant disposé rotatif à l'intérieur du stator (2) et monté rotatif sur le carter de moteur (4) au moyen d'un palier de sortie (19) et d'au moins un palier d'appui (20), le palier de sortie (19) étant réalisé sous la forme d'un palier à roulement, le stator (2) étant disposé à l'intérieur du carter de moteur (4) et fixé de manière solidaire en rotation sur le carter de moteur (4), et le palier de sortie (19) et le palier d'appui (20) étant disposés à l'intérieur du carter de moteur (4) respectivement dans la zone de la première face frontale (5) et dans la zone de la seconde face frontale (6), **caractérisé en ce qu'**un diamètre intérieur de palier de sortie (21) minimal est supérieur à un diamètre de rotor (22) maximal du rotor (3) et un diamètre extérieur de palier d'appui (23) maximal, le rotor (3) pouvant passer à travers le palier de sortie (19) et le stator avec le palier d'appui (20) fixé sur le rotor (3) et un montage du rotor (3) avec le palier d'appui (20) fixé sur celui-ci étant possible depuis un côté sortie du moteur électrique (1).

2. Moteur électrique (1) selon la revendication 1, **caractérisé en ce que** le diamètre intérieur de palier de sortie (21) est supérieur à 90 mm, de préférence supérieur à 100 mm et de manière particulièrement préférée supérieur à 110 mm.

3. Moteur électrique (1) selon l'une des revendications 1 ou 2, **caractérisé en ce que** le palier d'appui (20) est réalisé sous la forme d'un palier à roulement.

4. Moteur électrique (1) selon l'une des revendications 1 à 3, **caractérisé en ce que** le moteur électrique (1) présente, entre la première face frontale (5) et le palier de sortie (19), un élément d'étanchéité (24) qui est disposé entre une surface intérieure du carter de moteur (4) et une surface extérieure du rotor (3) et qui s'étend le long d'une direction circonférentielle du carter de moteur (4), l'élément d'étanchéité (24) permettant de rendre étanche un espace intérieur de moteur électrique défini par le carter de moteur (4) par rapport à un volume ambiant entourant le moteur électrique (1).

5. Moteur électrique (1) selon la revendication 4, **caractérisé en ce que** l'élément d'étanchéité (24) est un joint labyrinthe.

6. Moteur électrique selon l'une des revendications 1 à 4, **caractérisé en ce que** le rotor (3) présente, dans la zone de la première face frontale (5), une partie sortie (7) sur laquelle une partie entraînement (8) d'un tambour enrouleur (9) peut être fixée de manière solidaire en rotation, le carter de moteur (4) présentant une partie palier (10) qui s'étend depuis la première face frontale (5) en direction de la seconde face frontale (6), un diamètre de carter (11) du carter de moteur (4) étant inférieur dans la zone de la partie palier (10) à un diamètre d'évidement (12) d'un évidement de palier (13) du tambour enrouleur (9) et la partie palier (10) du carter de moteur (4) pouvant être introduite dans l'évidement de palier (13) du tambour enrouleur (9), la partie sortie (7) du rotor (3) et la partie entraînement (8) du tambour enrouleur (9) étant adaptées l'une à l'autre de telle manière que, lorsque la partie palier (10) est introduite dans l'évidement de palier (13), la partie sortie (7) et la partie entraînement (8) peuvent être amenées mécaniquement en liaison fonctionnelle l'une avec l'autre, de telle sorte que le tambour enrouleur (9) peut être amené dans un mouvement de rotation autour de la partie palier (10) par le moteur électrique (1).

7. Moteur électrique (1) selon la revendication 6, **caractérisé en ce que** des éléments de palier (16) sont disposés dans la partie palier (10), les éléments de palier (16) reposant dans la partie palier (10) contre une surface de carter (17) du carter de moteur (4), les éléments de palier (16) pouvant être amenés en contact avec une surface intérieure de tambour de l'évidement de palier (13) du tambour enrouleur (9), de telle sorte que le tambour enrouleur (9) peut être supporté sur le carter de moteur (4) dans la partie palier (10) au moyen des éléments de palier (16).

8. Moteur électrique (1) selon la revendication 7, **caractérisé en ce qu'**au moins un des éléments de palier (16) est réalisé sous la forme d'un palier à roulement.

9. Moteur électrique (1) selon l'une des revendications 7 ou 8, **caractérisé en ce qu'**au moins un des éléments de palier (16) est réalisé sous la forme d'un palier lisse.

10. Moteur électrique (1) selon l'une des revendications 6 à 9, **caractérisé en ce que** la partie sortie (7) du rotor (3) est adaptée, au moins sur certaines parties, à la partie entraînement (8) du tambour enrouleur (9) de telle manière que la partie sortie (7) peut être fixée sur la partie entraînement (8) au moyen d'au moins un moyen de fixation (26) .

11. Moteur électrique (1) selon l'une des revendications 6 à 10, **caractérisé en ce que** la partie sortie (7) du rotor (3) est adaptée, au moins sur certaines parties, à la partie entraînement (8) du tambour enrouleur (9) de telle manière qu'une liaison par complémentarité de forme peut être établie entre la partie sortie (7) et la partie entraînement (8).

12. Moteur électrique (1) selon l'une des revendications 6 à 11, **caractérisé en ce que** le rotor (3) du moteur électrique (1) présente un rapport des grandeurs entre une longueur de rotor et le diamètre de rotor (22) d'au moins 1,5:1, de préférence d'au moins 2:1 et de manière particulièrement préférée d'au moins 3:1.

13. Moteur électrique (1) selon l'une des revendications 6 à 12, **caractérisé en ce que** le moteur électrique (1) présente une masse totale d'au moins 75 kg, de préférence d'au moins 90 kg et de manière particulièrement préférée d'au moins 115 kg, le moteur électrique (1) étant réalisé sous la forme d'un moteur électrique (1) à refroidissement à l'eau.

14. Treuil (25) constitué d'un tambour enrouleur (9) et d'un moteur électrique (1) selon l'une des revendications 6 à 13, dans lequel la partie entraînement (8) du tambour enrouleur (9) est fixée sur la partie sortie (7) du rotor (3) du moteur électrique (1), la partie palier (10) du carter de moteur (4) étant introduite dans l'évidement de palier (13) du tambour enrouleur (9), la partie palier (10) étant entourée sur certaines parties par le tambour enrouleur (9) et le tambour enrouleur (9) étant rotatif autour de la partie palier (10).
